# EUROPEAN PATENT APPLICATION

(11) **EP 2 020 550 A2**
(43) Date of publication of application: **04.02.2009**
(21) Application number: 08104941.3
(22) Date of filing: 31.07.2008
(51) Int. Cl.: F16K 17/38, F16K 31/00

(54) **Air operated valve unit activated by thermal safety device, especially for smoke extractor flaps**

(30) Priority: 31.07.2007 PL 38305007
(71) Applicant: Rothgangl, Erhard, 61130 Saint Germain de la Coudre (FR)
(72) Inventor: Rothgangl, Erhard, 61130 Saint Germain de la Coudre (FR)
(74) Representative: Kacperski, Andrzej

(57) **Abstract**

The valve unit has a piercer (A) with a double-armed lever (4), the shorter, right hand arm of which is tensioned by the piercing spring (5). The normal position (a) of the double-armed lever (4) is maintained by the ampoule (7) of the thermal safety device when the piercing pin (2) is retracted by the back spring (6) and the piercing spring (5) is tensioned, the ampoule (7) being clamped between the seats of the fixed bracket (8) and of the turning bracket (9). The turning bracket (9) has a prong (11) at other side of the turning axis (10), caught by the longer arm of the double-armed lever (4). The piercer (A) and the cut-off valve (B) have a common body (3) in which is made the piercer channel (12) connected with the control chamber (14) of the cut-off valve (B). The slide (13) of the cut off valve (B) in actuated position uncovers by its left hand face the outlet channel of the feed line (17).

## Description

Subject of the invention is an air operated valve unit activated by a thermal safety device. The unit is used especially in extractor flap driving and controlling system on roofs, which in case of a fire shall be automatically opened in order to remove outside the gaseous combustion products.

The air control and driving systems of air driven piston actuators can be required to incorporate an additional thermal safety device, which is to initiate operation of the system by a signal of temperature rise above a limit considered normal. These requirements are characteristic for fire-fighting systems, especially for systems operating the driving units of roof flaps. Such installations in rooms with special fire hazards are being arranged with one or two independent control systems for air actuators fed from two compressed air sources.

A valve unit known from DE 196 27 738 has a piercing device of the gas cartridge membrane, connected with a two-way cut-off slide valve, suitably arranged in the feeding and venting lines of a central system. The normally open position of the slider controlling both flow lines is set by a back spring, and in the air controlled position both channels are closed. The piercing pin is being tripped by crushing the thermal safety ampoule, which blocks the ball latch keeping the piercing pin in retracted position when the piercing spring is tensioned. The thermal safety device arranged co-axially with the slider has the form of a glass ampoule filled with a liquid having a specified boiling point. When the boiling temperature occurs in the space near the ampoule, it's bursting releases the tappet blocking the ball and the firing pin. The released pin driven by the piercing spring force penetrates the diaphragm opening the gas cartridge and at the same time the axially released slider is moved by the back spring in the position of closing the feeding and the venting channels. The operating chamber of the piston actuator is then being supplied by gas from the pierced gas cartridge. After each operation of the unit by the thermal safety device, repeated arming of the piercing unit and fitting of a new ampoule makes it necessary to unscrew the nut holding the piercing spring and screw it down again upon fitting the new ampoule.

The valve unit according this invention is functionally similar to the above description, and has also a membrane piercer of the gas cartridge, the pin of which is operated by thermal bursting of the safety device ampoule, and has a normally-open flow cut-off slide valve kept open by a back spring.

The essence of the invention consists in that the piercer has a double arm lever, which is tensioned by the backing spring provided at the end of the shorter arm. The normal position of the double arm lever, when the pin is retracted by the backing spring, is maintained by the ampoule of the thermal safety device clamped between the seats of the fixed and turning brackets. The turning bracket has at the other side of the axis of rotation a prong engaged in the longer arm of the double arm lever.

Besides, the piercing pin and the flow cut-off valve have a common body in which a piercing pin channel is made, connected with the control chamber of the flow cut-off valve. In the actuated position, the slide of the cut-off valve uncovers the outlet channel of the feed line. Applying such a solution simplifies considerably the task of arming the unit - upon swinging away the double arm lever and moving the turning bracket in the position at which the prong is latched, the ampoule can be placed between the fixed and turning brackets.

Depending on the lay-out of the control system, it can be advantageous to apply a four-way cut-off valve for the function "opening and closing" of the smoke flap, and a two-way make for the function "only opening". In the slide of the four-way valve there is a radial hole, which in the actuated position of the device connects the inlet canal of the venting line with the spring chamber made in the slide at its right hand face. The spring chamber is vented.

It is also advantageous to have a pin indicator connected coaxially to the right hand face of the slide, which in actuated position protrudes out of the body. The protruding pin indicates that the valve unit was operated and needs to be fitted with a new ampoule.

The construction of the a unit made according the invention is explained by the description of two embodiments of the valve unit, shown in the drawing.

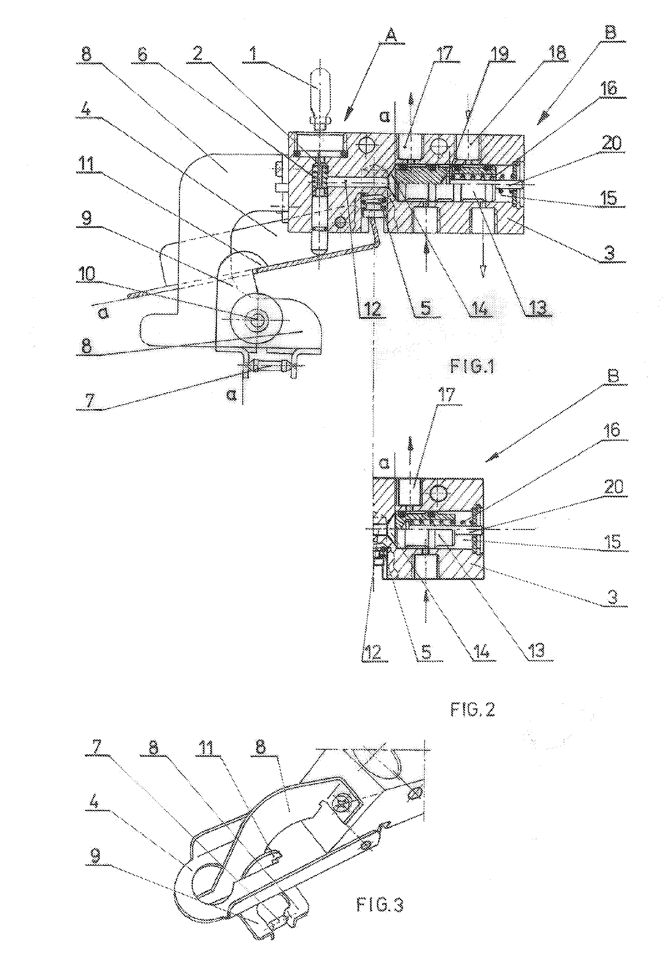

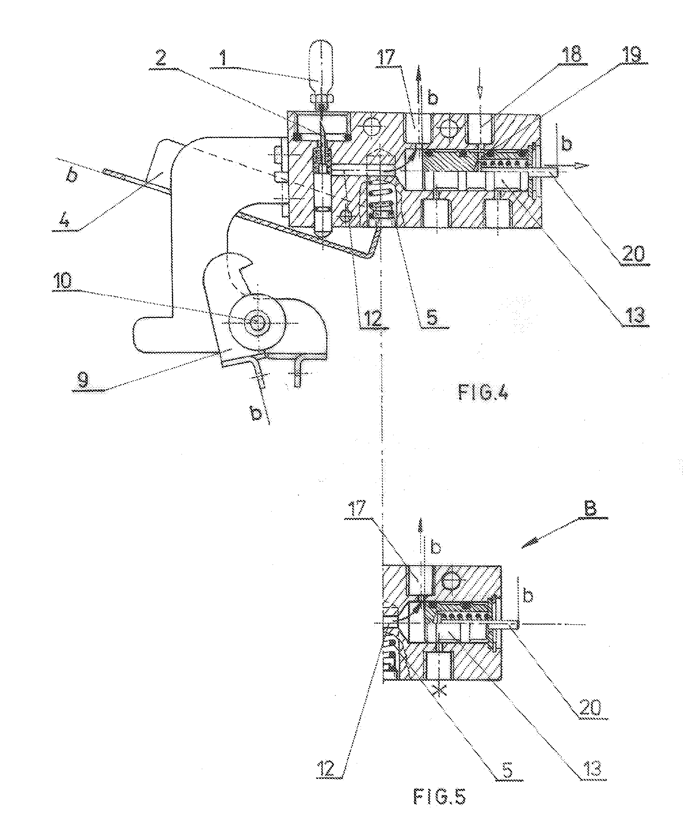

Fig. 1 in the drawing presents a longitudinal section of the unit with a four-way flow cut-off valve in normal position, with inserted ampoule of the thermal safety device, fig. 2 - a fragment of the longitudinal section of the unit with a two-way flow cut-off valve in armed position, fig. 3 - a fragment of fixing the ampoule in perspective view, identical for both makes of the device, fig.4 - a fragment of the longitudinal section of the unit with a four-way flow cut-off valve, when the ampoule exploded due to excess temperature, and fig. 5 - a partial section of the version with a two-way valve in the same situation.

The valve set shown in fig.1 consists of the piercer "A" perforating the membrane 1 of the gas cartridge filled with compressed CO₂, and of the four-way flow cut-off slide valve "B" connected with the feeding and venting branches of the pneumatic piston actuator, which drives the smoke flap on the roof and is part of the central control system, both mounted in the combined cubical body 3.

The sliding piercing pin 2 is placed in the body 3 co-axially with the tapped seating of the gas cartridge 1, the piercing pin being pressed by the back spring 6 and resting on the longer arm of the double-armed lever 4 by its ball-shaped ending. The double-armed lever 4 with channel-shaped cross-section grasps the body 3 by its arms and is swinging about an axis, which is perpendicular to the piercing pin 2. The bent shorter arm of the double-armed lever 4, which mates in the cut-out in the body 3, is subjected to the reaction of two piercing springs 5 set in holes, one behind the other, in the body 3. On the side wall of the body 3 is mounted the fixed bracket 8, the vertical arm of which passes through the slit made in the longer arm of the two-armed lever 4.

When the piercing pin 2 is retracted by the back spring 6 and the piercing springs 5 are tensioned, the double-armed lever 4 is in normal position marked by "*a*" in the drawing, kept then by the glass ampoule 7 of the thermal safety device pressed between the seats of the fixed bracket 8 and the turning bracket 9. The turning bracket 9 swings about the axis of rotation 10 and is provided with the prong 11 caught in the end of the slot in the double-armed lever 4.

The chamber of the piercing pin 2 is perpendicularly connected with the piercer channel 12 leading co-axially to the control chamber 14 of the sidle 13 in the cut-off valve B. In normal position, the sidle 13 is shifted to the left hand end position by the back spring 16 mounted in the spring chamber 15, which causes that the cut-off valve B is open on both line connections ports, the feeding and the venting ones. The back spring 16 presses on the slide 13 by the flange of the pin indicator 20, the end of which passes through a slightly greater hole in the cover closing the spring chamber 15. The end of the pin indicator 20 does not protrude in normal position out of the outline of the body 3.

In the case, when a fire not detected by the sensor of the central fire-fighting system happens in the room in which the valve unit is installed, bursting of the ampoule 7 of the thermal safety device causes in succession the following series of movements: releasing the double-armed lever 4, piercing the membrane of the gas cartridge 2 by the piercing pin 1 and flow of gas through the control chamber 14 to the outlet channel of feeding line 17 and further to the actuator driving the smoke flap, at the same time connecting the inlet channel of the venting line 18 with the surroundings through the radial hole 19 in the slide 13, the spring chamber 15, and the gap between the hole in its cover and the pin indicator 20. In consequence, the connections of the central system to the feed channel and the vent channel are closed. This situation, marked in fig.4 by *"b",* shows the changed positions of the moving elements, i.e. the turning bracket 9, the double-armed lever 4, the piercing pin 2, the slide 13, and the pin indicator 20, now protruding out of the body 3. The movement of the pin indicator 20 can, beside visual warning of the occurred de-arming of the unit, serve to initiate an electric signal informing on the fire location.

The solution according the second version of the valve, with the function "only opening", has the piercer "A" identical with the above description, fitted with the glass ampoule 7 of the thermal safety device. That embodiment is shown in fig. 2 and 5 with merely the different fragments of the cut-off two-way valve "B" in both characteristic operational positions. The operation of that valve is therefore clearly understandable and it is simpler due to the fact that the two-way is connected with only one branch feeding the piston side of the actuator moving the smoke flap.

**List of parts**

| | | |
|---|---|---|
| A | Piercer | |
| | 1 | gas cartridge |
| | 2 | piercing pin |
| | 3 | body |
| | 4 | double arm lever |
| | 5 | piercing spring |
| | 6 | backing spring |
| | 7 | ampoule of the thermal safety device |
| | 8 | fixed bracket |
| | 9 | turning bracket |
| | 10 | axis of rotation |
| | 11 | prong |
| | 12 | piercer channel |
| B | Cut-off valve | |
| | 13 | slide |
| | 14 | control chamber |
| | 15 | spring chamber |
| | 16 | backing spring |
| | 17 | outlet channel of the feed line |
| | 18 | inlet channel of the venting line |
| | 19 | radial hole in slide 13 |
| | 20 | pin indicator |
| a | normal position | |
| b | actuated position | |

## Claims

1. Air operated valve unit activated by a thermal safety device, especially for smoke extractor flaps on roofs, having a piercer punching the membrane of a gas cartridge, the piercing pin being activated in consequence of thermal bursting of the ampoule of the thermal safety device, and having a flow cut-off slide valve normally held open by a backing spring and closed in pneumatically actuated position, **characterized in that** the piercer (A) has a double-armed lever (4), which at the end of its shorter arm is tensioned by the piercing spring (5), the normal position of that double-armed lever (4) when the piercing pin (2) is retracted due to the action of the back spring (6) and the tensioned piercing spring (5) being kept by the ampoule (7) of the thermal safety device clamped between the seats of the fixed bracket (8) and turning bracket (9) which at the other side of its axis of rotation (10) has a prong (11) engaged into the longer arm of the double-armed lever (4), and also **in that** the piercer (A) and the cut-off valve (B) have a common body (3) in which is made the piercer channel (12) connected with the control chamber (14) of the cut-off valve (B), while the slide (13) of the cut-off valve (B) in actuated position (b) covers by its left hand face the outlet channel of the feed line (17).

2. Valve unit according to claim 1, **characterized in that** the cut-off valve (B) is a four-way valve the slide (13) of which has a radial hole (19) connecting in actuated valve position (b) the inlet channel of the venting line with the spring chamber (15) made in the slide (13) at its right hand face, venting the chamber.

3. Valve unit according to claim 1, **characterized in that** the cut-off valve (B) is a two-way valve the slide (13) of which has at its right hand side a vented spring chamber (15).

4. Valve unit according to claim 1, **characterized in that** the right hand face of the slide (13) is coaxially connected with an indicating pin (20), which in actuated position protrudes out of the body (3).
